(19) **Europäisches Patentamt**
**European Patent Office**
**Office européen des brevets**

(11) **EP 4 708 742 A1**

(12) **EUROPEAN PATENT APPLICATION**

(43) Date of publication:
**11.03.2026 Bulletin 2026/11**

(21) Application number: **25196315.3**

(22) Date of filing: **18.08.2025**

(51) International Patent Classification (IPC):
*H04L 1/00* (2006.01)     *H04B 1/7163* (2011.01)
*H04W 4/80* (2018.01)     *H04W 52/00* (2009.01)
*H04W 72/12* (2023.01)     *H04W 84/12* (2009.01)

(52) Cooperative Patent Classification (CPC):
**H04L 1/0001; H04B 1/7163; H04W 4/80;**
**H04W 72/1215; H04W 84/12**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **06.09.2024 IN 202441067628**

(71) Applicant: **NXP USA, Inc.**
**Austin, TX 78735 (US)**

(72) Inventors:
• **AHIRWAR, Vijay**
**5656AG Eindhoven (NL)**
• **KHUDE, Nilesh Nilkanth**
**5656AG Eindhoven (NL)**
• **SRIVASTAVA, Rishabh**
**5656AG Eindhoven (NL)**
• **SRINIVASA, Sudhir**
**5656AG Eindhoven (NL)**

(74) Representative: **Colaiuda, Antonella**
**NXP Semiconductors Germany GmbH**
**Intellectual Property Group**
**Beiersdorfstraße 12**
**22529 Hamburg (DE)**

(54) **METHOD AND SYSTEM FOR WIFI ADAPTATION FOR ULTRA-WIDE BAND (UWB) COEXISTENCE**

(57)     A method and system for a WiFi radio and a ultrawide band (UWB) radio to co-exist. A UWB transmission is detected and based on the UWB transmission generating adjacent channel interference to the WiFi radio, a transmit power of the WiFi radio is only reduced and a WiFi signal with the reduced transmit power is transmitted. Based on the UWB transmission generating overlapping frequency interference with the WiFi radio, causing a WiFi signal with the one or more of a reduced transmit power, reduced modulation coding scheme, or reduced operating bandwidth to be transmitted.

FIG. 1

**EP 4 708 742 A1**

**Description**

**FIELD OF USE**

This disclosure generally relates to WiFi communications, and more particularly to WiFi bandwidth and WiFi modulation coding scheme adaptation for ultra-wide band (UWB) coexistence.

**BACKGROUND**

IEEE 802.11 (WiFi) uses a bandwidth of 80 MHz or 160 MHz in a 5 GHz band for frame exchange and up to 320 MHz for frame exchange in a 5-6 GHz band. WiFi transmit power in the 5 GHz band can be up to 17 dBm/MHz and up to 23 dBm/MHz in the 6 GHz band while a UWB transmitter can transmit up to -41.3 dBm/MHz in a 3.1-10.6 GHz frequency range. IEEE 802.15.4 (UWB) channels defined in an unlicensed national information infrastructure (UNII) 5/6/7/8 bands overlap in frequency with WiFi channels in the upper 5 GHz and 6 GHz bands of the WiFi bandwidth. When UWB and WiFi radios are co-located, the WiFi transmission could interfere with a UWB reception and specifically overlapping frequency interference is a probable occurrence in a 6 GHz spectrum for WiFi due to the wideband nature of UWB technology.

**BRIEF DESCRIPTION OF THE DRAWINGS**

FIG. 1 is an example block diagram of a communication system having co-located WiFi and UWB radios in accordance with one or more embodiments.
FIG. 2 illustrates example UWB communication in accordance with one or more embodiments.
FIG. 3 is an example flow chart of functions associated with determining whether the UWB radio leads to overlapping frequency interference with the WiFi radio or adjacent channel interference with a WiFi radio in accordance with one or more embodiments.
FIG. 4 is an example flow chart of functions associated with WiFi adaptation in presence of a UWB transmission in accordance with one or more embodiments.

The drawings are for the purpose of illustrating example embodiments, but it is understood that the embodiments are not limited to the arrangements and instrumentality shown in the drawings.

**DETAILED DESCRIPTION**

The detailed description of the appended drawings is intended as a description of the various embodiments of the present disclosure, and is not intended to represent the only form in which the present disclosure may be practiced. It is to be understood that the same or equivalent functions may be accomplished by different embodiments that are intended to be encompassed within the scope of the present disclosure.

WiFi receive sensitivity is degraded for UWB adjacent frequency interference (also known as adjacent channel interference (ACI)) to a WiFi signal frequency spectrum and degraded even more when UWB interference is overlapping frequency interference to the WiFi signal frequency spectrum. UWB ranging events also result in WiFi packet errors and lead to slow modulation coding scheme adaptation and throughput disruption to the WiFi radio.

One or more embodiments disclosed herein are directed to a method and system for a WiFi radio to one or more of reduce its operating bandwidth, power, or modulation coding scheme (MCS) in presence of a co-located ultra-wide band (UWB) radio or co-existing UWB radio to reduce UWB interference. For overlapping frequency interference, the WiFi radio reduces a modulation coding scheme for transmitted WiFi signals by adjusting a modulation coding scheme (MCS) to MCS-0 directly to maintain reliable WiFi communication in the presence of UWB communication and a bandwidth of transmitted WiFi signals directly to 20 MHz so that ultra-wide band (UWB) receivers could use a band-stop filter which has a 20 MHz stop bandwidth to reduce the interference. The adaptation results in an immediate improvement in WiFi reception reliability compared to reducing bandwidth and modulation coding scheme gradually based on longer term statistics. Additionally, or alternatively, the WiFi radio adjusts its transmit power for overlapping frequency interference and adjacent frequency interference. When the WiFi radio is in a micro-access point (AP) mode, the WiFi radio is able to choose to one or more of lower the bandwidth of transmitted WiFi signals to 20 MHz, change the MCS to MCS-0, or adjust a transmit power while when the WiFi radio is in a station mode, the WiFi radio sends control signals to its AP to one or more of reduce the bandwidth of transmitted WiFi signals to 20 MHz, change the MCS to MCS-0, or adjust a transmit power. Well known instructions, protocols, structures, and techniques have not been shown in detail in order not to obfuscate the description.

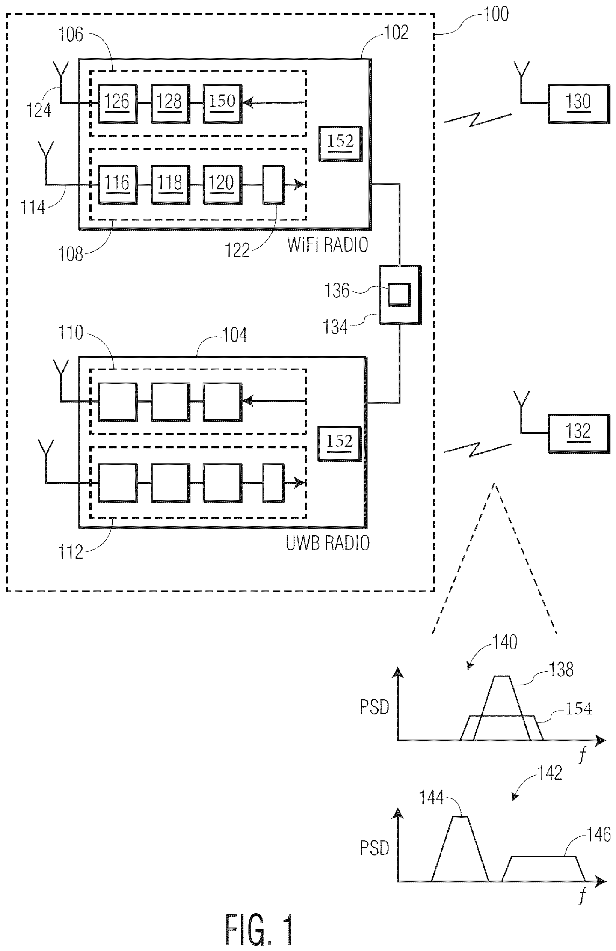

FIG. 1 is an example block diagram of a communication system having co-located radio 100 in accordance with one or more embodiments. The co-located radio 100 may include a WiFi radio 102 and UWB radio 104 which are in proximity to each other such as being implemented in a system on a chip (SoC) or chipset. For example, the WiFi radio 102 may be a wireless communication device such as a wireless local area network (WiFi) protocol device defined by IEEE 802.11. Further, the UWB radio 104 may be another wireless communication device such as an ultrawide band (UWB) protocol device defined by IEEE 802.15.4a/z. In one or more examples, the co-located radio 100 may be implemented as one or more of a system on a chip (SoC) such as a multi-radio chipset. The UWB radio, WiFi radio and associated components described herein may be implemented with circuitry such as one or more of analog circuitry, mix signal circuitry, memory circuitry, logic circuitry, or processing circuitry that executes code stored in a memory that when executed by the processing circuitry performs the disclosed functions.

Each radio 102, 104 may have a respective transmitter and receiver. The WiFi radio 102 may have a transmitter 106 and receiver 108. Additionally, the UWB radio 104 may have a transmitter 110 and receiver 112. In one or more examples, the receiver 108 of the WiFi radio 104 may have an antenna 114, an LNA 116, a mixer 118, filter 120, and amplifier 122. The antenna 114 may be configured to receive a signal in an LNA bandwidth of the LNA 116 and the LNA 116 may amplify the received signal over the LNA bandwidth. The LNA bandwidth may define a bandwidth centered at a frequency over which the LNA 116 receives signals such as a 1 GHz to 2 GHz bandwidth in contrast to a bandwidth of a WiFi signal such as 20 MHz, 40 MHz, 80 MHz, 160 MHz or 320 MHz. The mixer 118 may down-convert the received signal to a baseband frequency such as 1 GHz and which is provided to a filter 120 with a filter bandwidth centered at a frequency. The filter bandwidth may be narrower than the LNA bandwidth but greater than or equal to a bandwidth of a WiFi signal to be received. The filter 120 may allow a WiFi signal to pass through the filter 120 while suppressing any non-WiFi signals outside of the filter bandwidth. The filter bandwidth may be 500 MHz, for example, and narrower than the LNA bandwidth in one or more examples to allow a WiFi signal to be output by the filter 120 while suppressing the other signals. The filtered signal is provided to a narrow band amplifier 122 which then amplifies the filtered signal. The baseband processing is then performed on the signal output by the narrow band amplifier 122 to recover the WiFi signal. In one or more examples, the transmitter 106 of the WiFi radio 102 may have an antenna 124, a power amplifier 126, a mixer 128, and a baseband processor 150. The baseband processor 150 may generate a signal to be transmitted which is provided to the mixer 128 which upconverts the signal generated by the baseband processor 150 to a radio frequency (RF) signal. The power amplifier 126 amplifies the RF signal which is then transmitted over the antenna 124. The receiver 112 and transmitter 110 may be implemented in a manner similar to that of the receiver 106 and transmitter 108, respectively and details of implementation are not illustrated for conciseness. Further in some examples, an antenna of a receiver and transmitter may be shared by a radio or the transmitter and receiver of a radio may have its own antenna.

In addition to being co-located, the WiFi radio 102 may further operate in co-existence with the UWB radio 104. Coexistence is the capability of multiple wireless devices and services in the same geographical area to access the same radio frequency (RF) bandwidth simultaneously for communication. The UWB radio 104 may operate in a same bandwidth used by the WiFi radio 102 to transmit and receive signals as shown in frequency spectrums 140, 142. Example frequency spectrums 140, 142 illustrate power spectral density (PSD) as a function of frequency. In one example, a frequency spectrum used by the WiFi radio 102 to transmit WiFi signals has a first bandwidth 138 for communication with a remote WiFi radio 130 and a frequency spectrum used by the UWB radio 104 to transmit UWB signals has a second bandwidth 154 for communication with a remote UWB radio 132, where the first frequency spectrum 138 and second frequency spectrum 154 at least partially overlap. In another example, a frequency spectrum used by the WiFi radio 102 to transmit WiFi signals has a first bandwidth 144 for communication with a remote WiFi radio 130 and a frequency spectrum used by the UWB radio 104 to transmit UWB signals has a second bandwidth 146 for communication with a remote UWB radio 132, where the first frequency spectrum 144 and second frequency spectrum 146 are adjacent to each other and do not overlap. Further, the UWB frequency spectrum may be larger than the WiFi frequency spectrum. IEEE 802.11 (WiFi) spans across approximately 700 MHz in a 5 GHz band and approximately 1000 MHz in a 6 GHz band and having an operating bandwidth of 20 to 320 Mhz to transmit WiFi signals. Further, IEEE 802.15.4 (UWB) has channels defined in an unlicensed national information infrastructure (UNII) 5/6/7/8 bands which overlap with channels in the upper 5 GHz and 6 GHz bands of industrial medical scientific (ISM) bands used by WiFi. The UWB may use a bandwidth of 500 MHz, 1 GHz, or 1.3 GHz in examples.

WiFi transmit power in the 5 GHz band can be up to 17 dBm/MHz, and up to 23 dBm/MHz in the 6 GHz band while UWB transmit power can be up to -41.3 dBm/MHz in the 5 GHz band and 6 GHz band. The UWB transmission could interfere with WiFi reception and specifically overlapping frequency interference or adjacent frequency interference is a probable occurrence in a 5-6 GHz band of the WiFi radio 102 due to the wideband nature of UWB transmission. Overlapping frequency interference results when a frequency spectrum of signals transmitted by the UWB radio 104 and the WiFi radio 102 partially or completely overlap in frequency, an example which is illustrated by frequency spectrum 140. Adjacent frequency interference results when a frequency spectrum of signals transmitted by the UWB radio 104 and the WiFi radio 102 do not partially or completely overlap in frequency but are adjacent in frequency, an example of which is illustrated by spectrum 142. For example, a frequency spectrum of signals transmitted by the UWB radio 104 and a frequency spectrum of signals transmitted by the WiFi radio 102 may be separated by 100 MHz to 300 MHz in one or more examples. The WiFi radio 102 transmits and receives signals based on a modulation coding scheme (MCS) defined by IEEE 802.11. Various modulation coding schemes may be more or less robust to same interference. For example, MCS-0 may be more robust to interference compared to MCS-11. Overlapping frequency interference can cause degradation in a WiFi reception sensitivity for a given modulation coding scheme and UWB transmit power. For example, the overlapping frequency interference resulting from a -70 dB/MHz UWB transmission could result in a reduction in WiFi reception sensitivity and increased packet error for a WiFi signal. Adjacent frequency interference can cause less degradation in WiFi reception sensitivity and less packet error, but still be unacceptable. Further, the filter 120 which is applied by the receiver 108 of the WiFi radio 102 which receives a WiFi transmission from the WiFi radio 130 may not sufficiently suppress interference from the UWB transmission resulting in aliasing back to a desired signal which increases a noise floor and degrades receiver performance. Similarly, WiFi transmission affects reception by the remote UWB radio 132, but the remote UWB radio 132 which receives WiFi transmissions from the WiFi radio 102 is able to filter out a 20 MHz bandwidth WiFi signal which produces overlapping frequency interference with the UWB radio 104 using a 20 MHz bandwidth band-stop filter, in one or more examples, but any higher band-stop filtering would cause loss of information in a UWB signal which is received.

One or more embodiments disclosed herein are directed to improving WiFi communication and UWB communication. A UWB transmission from the UWB radio 104 co-located with the WiFi radio 102 may interfere with reception of WiFi signals by the WiFi radio 102 or remote WiFi radio 130 and the UWB radio 132 transmission may interfere with reception of WiFi signals by the WiFi radio 102 and the remote WiFi radio 130 in one or more examples. The co-located radio 100 may include an arbitrator 134 which facilitates transmission of WiFi signals by the WiFi radio 102 and UWB signals by the UWB radio 104. The arbitrator 134 may include one or more registers 136 which indicate whether a radio has permission to transmit. A radio may check the one or more registers 136 to determine whether it has permission to transmit and then perform the transmission based on detecting the permission. Further, the radio may provide an indication of a frequency spectrum of the UWB transmission and time duration of the transmission of the UWB signal to the arbitrator 134 which is also stored in the one or more registers 136. The frequency spectrum may be indicated by one or more of a bandwidth of transmission or frequency of transmission by the UWB radio. In one or more examples, the WiFi radio 102 may access the one or more registers 136 and determine that it is able to transmit a WiFi signal. The WiFi radio 102 may then further determine from the one or more registers 136 one or more of a transmission duration, transmission bandwidth, or transmission frequency of any UWB transmission by the UWB radio 104 which will interfere with the WiFi transmission by the WiFi radio 102.

If adjacent frequency interference would be realized, then a WiFi co-existence circuit 152 causes the WiFi radio 102 to reduce a transmit power to reduce interference to the UWB radio 104. The power may be reduced in accordance with an receiver signal strength indication (RSSI) from a remote WiFi device which receives signals transmitted by the WiFi radio 102. For example, the transmit power may be reduced to a level such that one or more of a WiFi receiver sensitivity, error rate, or signal to noise ratio associated with the reception of WiFi signals by the remote WiFi radio 130 is acceptable.

If overlapping frequency interference is realized, then the WiFi co-existence circuit 152 may cause the WiFi radio 102 which is an access point (AP) to reduce an operating bandwidth so that the UWB radio 104 can apply a band-stop filter to filter out interference from transmitted WiFi signals. The operating bandwidth may define a bandwidth of WiFi signals transmitted by the WiFi radio. For example, the WiFi radio 102 may be transmitting signals in a primary channel and one or more secondary channels where each channel is 20 MHz. The WiFi radio 102 may be arranged to now transmit in only the primary 20 MHz channel based on the overlapping frequency interference to allow the UWB radio 104 or remote UWB radio 132. The bandwidth may be changed directly from the current bandwidth to 20 MHz rather than being gradually changed. Additionally, or alternatively, the WiFi radio 102 may reduce a transmit power to reduce interference to the UWB radio 104. Still additionally, or alternatively, the WiFi radio coexistence circuit 152 may cause the WiFi radio 102 which is an access point (AP) to transmit WiFi signals with a lower MCS such as MCS-0 to reduce reception errors by the WiFi radio 130 which receives WiFi signals from the WiFi radio 102. The MCS may change from the current MCS directly to MCS-0 rather than gradually being changed. Additionally, the STA associated with the AP may also change its modulation coding scheme to MCS-0. If the WiFi radio is a client station (STA), the WiFi radio 102 may signal an AP such as WiFi radio 130 to one or more of transmit signals in a reduced operating bandwidth such as a 20 MHz bandwidth to improve reception of WiFi signals by the WiFi radio 102, change its MCS to MCS-0, or reduce its transmit power. Additionally or alternatively, the STA associated with the AP may also change its modulation coding scheme to MCS-0.

In some embodiments, UWB interference may be generated by a UWB radio 132 which is not collocated with the WiFi radio 102. The arbitrator 134 is only able to provide information on whether the co-located UWB radio 104 is transmitting or receiving a UWB signal. It does not provide such information for whether the remote UWB radio 132 is transmitting or receiving a UWB signal. Instead, the WiFi radio 102 may need to detect the UWB communication of the UWB radio 132 because the UWB radio 132 is not co-located with the WiFi radio 102. Based on the detection, the WiFi radio 102 may determine whether the UWB transmission generates overlapping frequency interference or adjacent frequency interference. Then, the WiFi radio 102 may one or more of adjust a transmit power, operating bandwidth, or modulation coding scheme of the WiFi radio 102 or signal a remote WiFi radio to one or more of adjust an operating bandwidth, transmit power, or MCS depending on whether the WiFi radio 102 is configured as a AP or STA.

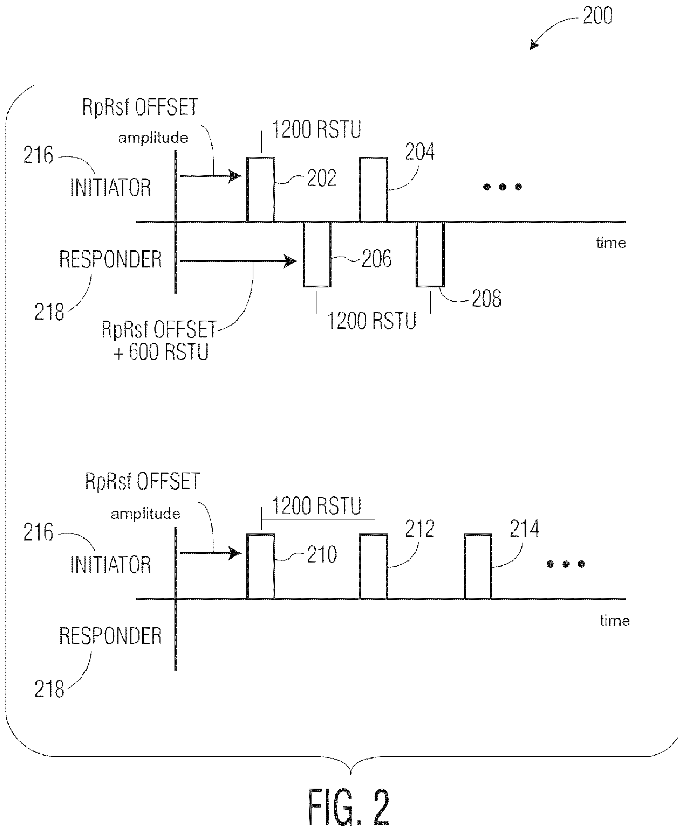

FIG. 2 illustrates example UWB transmissions 200 in accordance with one or more embodiments. In one example, the UWB standard defines a packet exchange between an initiator 216 and a responder 218. The initiator 216 and responder 218 may be respective UWB radios such as UWB radio 104, 132. The initiator 216 may send a packet 202 which the responder 218 responds to with another packet 206. The initiator 216 will send the packet 202 at an offset time (RpRstOffset) and the responder 218 will send the packet 206 in response at the offset time + 600 RSTU (ranging scheduling time unit) in one or more examples. Further, the initiator 216 will send a packet 204 and the responder 218 will send a corresponding packet 208. This process of sending a request packet followed by a response packet may continue such that packets may be sent by the initiator 216 and responder 218 at a periodic interval of every 1200 RSTU which is equivalent to 1 ms in one or more examples. In another example, the initiator 216 may send a packet 210 at an offset time and then other packets 212, 214 etc. at a periodic interval of every 1200 RSTU. The responder 218 will not respond to the packet 210, 212 etc. and instead only listen to the transmitted packets. The WiFi radio 102 may detect UWB interference from the remote UWB radio 132 based on the detection of the packets and periodic nature of the packets over time rather than querying the arbitrator 134 because the arbitrator 134 is not able to indicate UWB transmissions by the remote UWB radio 132 not co-located. Based on the detection of the UWB transmissions, the WiFi radio 102 may then determine a type of the UWB interference to determine whether the WiFi radio 102 is to one or more of adjust its transmit power, transmission bandwidth, or modulation coding scheme based on the UWB interference. If the interference from the remote UWB radio 132 is overlapping frequency interference, the WiFi radio 102 in the form of an AP may one or more of reduce its operating bandwidth to 20 MHz, reduce a transmit power, or adjust a modulation coding scheme to MCS-0. If the interference is adjacent channel interference, then the WiFi radio 102 may reduce its transmit power.

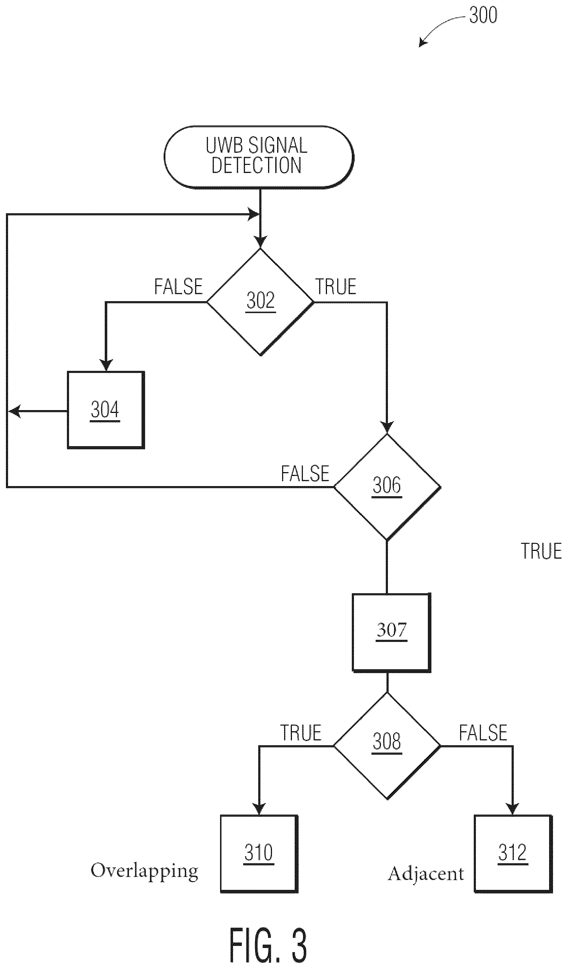

FIG. 3 is an example flow chart 300 of functions associated with determining whether the UWB radio 132 leads to overlapping frequency interference with the WiFi radio 102 or adjacent channel interference with the WiFi radio 102 in accordance with one or more embodiments. The receiver may receive signals in a frequency band in which WiFi signals are transmitted such as 5-6 GHz band and have bandwidth of 1-2 GHz which is greater than a bandwidth of a WiFi signal. To detect the UWB interference, the WiFi radio 102 may measure a peak amplitude of signals received at the LNA 116. Then, the WiFi radio 102 may determine a type of UWB interference by measuring a peak amplitude of in-band signals. The receiver 108 or coexistence circuit 152 of the WiFi radio 102 may perform certain functions in flow chart 300 in one or more examples.

At 302, a determination is made whether a peak amplitude of signals output by the LNA of the WiFi radio 102 at a first time instance is greater than a threshold. If the peak amplitude is not greater than a threshold at the first time instance, then at 304 the WiFi radio waits for a next detection window to detect a UWB signal and processing returns back to 302 where no UWB signal is detected. The next detection may occur in 1 ms in accordance with UWB protocol. If the peak amplitude is greater than the threshold at the first time instance, then a UWB signal is detected. The signals may be UWB packets in one or more examples. At 306, a determination is made whether the peak amplitude exceeds the threshold for N successive intervals where N is an integer. If the peak amplitude does not exceed the threshold for N successive intervals after the UWB signal is initially detected, then processing returns to 302. If the peak amplitude exceeds the threshold for N successive intervals after the UWB signal is initially detected, then at 307 a peak amplitude of in-band signals of the WiFi 102 radio for each successive N intervals is determined which corresponds to a peak amplitude at the output of the narrow band amplifier 122 of the receiver 108 or output of the filter 120. At 308, a determination is made whether a weighted sum of the peak amplitude of signals output by the LNA and peak amplitude of in-band signals of the WiFi 102 radio exceeds the threshold for M successive intervals of the N intervals where M < N and M is an integer. In some examples, the in-band signals may be signals output by the narrow band amplifier 122 of the WiFi radio 102 as a result of filtering by the filter 120 and low pass filtering. The filter 120 may have a filter bandwidth centered at a frequency to allow WiFi signals to pass through the filter 120, but any UWB signals which has a frequency spectrum which overlaps with the frequency spectrum of the WiFi signals would also pass through the filter 120 and produce overlapping frequency interference. If the weighted sum exceeds the threshold then at 310 for the M intervals the UWB signal transmitted by the UWB radio 132 produces overlapping frequency interference with the WiFi radio 102. If weighed sum does not exceed the threshold for the M intervals, then at 312 the UWB signal transmitted by the UWB radio 132 produces adjacent channel interference with the WiFi radio. The logic may be summarized as:

- $(w_1 * \text{LNA output signal envelope peak amplitude} + w_2 * \text{In-band signal envelope peak amplitude}) >= T \rightarrow$ Overlapping UWB Interference

-

(w$_1$ * LNA output signal envelope peak amplitude + w$_2$ * In-band signal envelope peak amplitude) < T → Adjacent frequency UWB Interference

where $w_1$ and $w_2$ are weights applied to the peak amplitude values and T is the threshold. In an example, $w_1 + w_2 = 1$. The WiFi radio 102 may then adjust one or more of a transmit power, transmission bandwidth or modulation coding scheme of a WiFi radio based on the type of the UWB interference.

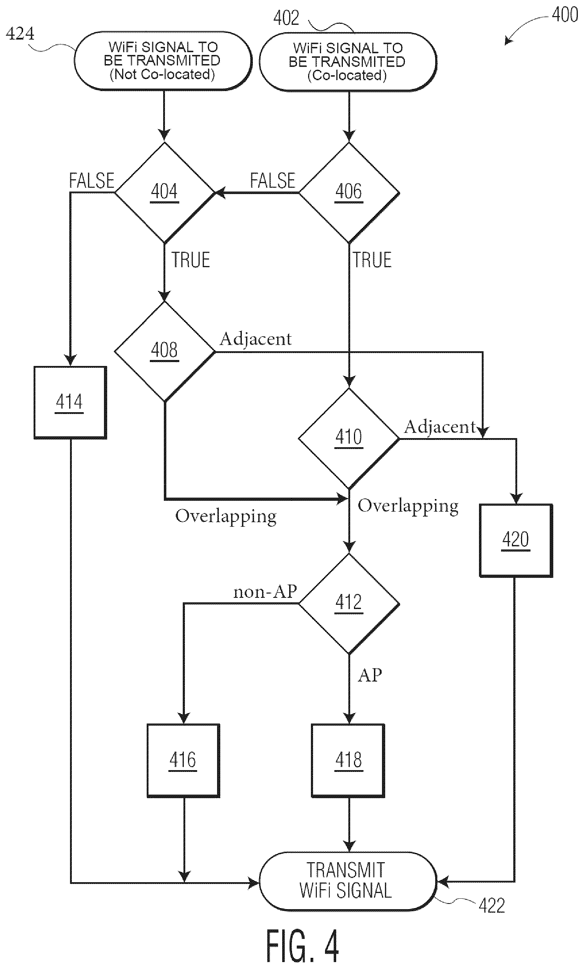

FIG. 4 is an example flow chart 400 of functions associated with WiFi adaptation in presence of a UWB transmission in accordance with one or more embodiments. Certain functions may be performed by the WiFi radio 102 or the WiFi coexistence circuit 152. Further, the UWB transmission may be from a co-located UWB radio such as UWB radio 104 or from a remote UWB radio 132. The WiFi bandwidth, transmit power, or MCS may vary depending on whether the UWB transmission generates adjacent channel interference or overlapping frequency interference, the interference with the WiFi radio 102 is from the remote UWB radio 132 or co-located UWB radio 102, and whether the WiFi radio is arranged as an access point (AP) or a client station (STA) in one or more embodiments.

At 402, a WiFi radio which is co-located with a UWB radio is to transmit a WiFi signal. The WiFi signal may have an operating bandwidth and be transmitted by a WiFi receiver in one or more examples. Further, the radio may store an indication of whether it is co-located with the UWB radio. At 406, a determination is made whether a UWB transmission by the UWB radio co-located with a WiFi radio is pending. The WiFi radio may make this determination by querying the arbitrator. If no UWB transmission by the co-located UWB radio is pending, then processing continues to step 404 described below. If the UWB transmission is pending, then at 410 a determination is made of a nature of the interference by the UWB transmission with the WiFi radio. If the UWB transmission produces overlapping frequency interference with the WiFi radio, then at 412, a determination is made whether the WiFi radio is an AP. If the WiFi radio is an AP, then at 418 the WiFi radio directly reduces its current operating bandwidth to 20 MHz so that the UWB radio is able to apply a band-stop filter to reduce the interference from the WiFi signal. Additionally, or alternatively, the WiFi radio directly reduces its current MCS to MCS-0 to allow the WiFi radio to transmit WiFi signals with less errors and sustain a link. Still additionally or alternatively, the WiFi radio reduces a transmit power to reduce impact on reception of UWB signals by the UWB radio. If the WiFi radio is not an AP, then at 416 a remote WiFi radio which is an AP is signaled via a control signal to directly reduce an transmission bandwidth to 20 MHz. Additionally, or alternatively, the remote WiFi radio may be signaled to directly reduce a modulation coding scheme to MCS-0. The signaling may be in a dynamic capability field of a management frame of the WiFi radio in one or more examples which is received by the remote WiFi radio. Still additionally or alternatively, the transmit power of the WiFi radio may be reduced in accordance with a receive signal strength indicator (RSSI) of the remote WiFi radio. If the UWB transmission produces adjacent channel interference, then at 420 the WiFi radio reduces a transmit power to reduce impact on reception of UWB signals by the UWB radio. The transmit power may be reduced in accordance with an RSSI of the remote WiFi radio. In some embodiments, the WiFi radio may not be co-located with the UWB radio. If the UWB radio which is co-located is not transmitting a UWB signal, then at 404 a determination is made whether a UWB transmission is detected from an remote UWB radio. The UWB transmission from the remote UWB radio may be based on detecting successive signal peaks every N ms as outlined in FIG. 3. At 414, the WiFi radio transmits a WiFi signal when the UWB signal is not detected. At 408, a determination is made whether the UWB transmission produces overlapping frequency interference or adjacent channel interference with the Wi-Fi transmission when the UWB signal is detected. If the UWB transmission generates adjacent channel interference, then at 420 the WiFi radio only reduces its transmit power. If the UWB transmission generates overlapping frequency interference, then processing continues to step 412 where a determination is made whether the WiFi radio is an AP. If the WiFi radio is not an AP, then at 416 the WiFi radio signals a remote WiFi radio which is an AP to one or more of reduce an transmission bandwidth or modulation coding scheme to MCS-0. The signaling may be in a dynamic capability field of a management frame in one or more examples. Additionally or alternatively, the WiFi radio may reduce a transmit power. If the WiFi radio is an AP, the at 418 the WiFi radio reduce one or more of an operating bandwidth to 20 MHz, transmit power, or current modulation coding scheme to MCS-0. The WiFi radio then transmits the WiFi signal at 422.

In some embodiments, the WiFi radio may not be co-located with a UWB radio when a WiFi signal is to be transmitted. The radio may store an indication of whether it is co-located with the UWB radio. In this case processing may begin at step 424 to determine whether a UWB transmission from the remote UWB radio may interfere with the WiFi radio.

Advantageously, a UWB radio 104 and a WiFi radio 102 which are co-located are able to continue simultaneous transmission and reception by the WiFi radio 102 while the UWB radio 104 is transmitting or receiving a UWB signal, rather than switching off the WiFi radio 102 when the UWB radio 104 is transmitting and receiving UWB signals. The WiFi radio 102 is able to quickly adapt to a 20 MHz bandwidth and MCS-0 rate which is useful especially for high quality of service (QoS) / low latency data such as real time voice etc. instead of the WiFi radio 102 having to detect packet loss due to UWB interference and dropping an MCS and bandwidth gradually. Further, the UWB reception is improved by assisting the UWB radio 104 to apply a band-stop filter to reduce interference by the 20 MHz channel of the WiFi radio 102, improving UWB reception performance.

In an embodiment, a method for a WiFi radio and a ultrawide band (UWB) radio to co-exist is disclosed. The method includes detecting a UWB transmission; based on the UWB transmission generating adjacent channel interference with the WiFi radio, only reducing a transmit power of the WiFi radio and transmitting a WiFi signal with the reduced transmit power; and based on the UWB transmission generating overlapping frequency interference with the WiFi radio, causing a WiFi signal with one or more of a reduced transmit power, reduced modulation coding scheme, or reduced operating bandwidth to be transmitted. In an example, the operating bandwidth of the WiFi radio is directly reduced to 20 MHz. In an example, the modulation coding scheme is directly reduced to modulation coding scheme (MCS) 0 defined by IEEE 802.11. In an example, the UWB radio and WiFi radio are co-located and wherein detecting the UWB transmission includes receiving an indication from an arbitrator of a frequency spectrum and timing of the UWB transmission from the UWB radio indicative of whether adjacent channel interference or overlapping frequency interference is realized by the UWB radio. In an example, the UWB radio is remote to the WiFi radio and wherein detecting the UWB transmission includes determining that a power of a signal output by a low noise amplifier (LNA) of the WiFi radio is above a threshold level at periodic intervals. In an example, detecting the UWB transmission further includes determining whether a weighed sum of the power of the signal output by the LNA and a power of in-band signals of the WiFi radio in one or more intervals is above the threshold level; based on the weighed sum being above the threshold, determining that UWB transmission from the UWB radio produces overlapping frequency interference with the WiFi transmission, and based on the weighted sum being below the threshold, determining that the UWB transmission from the UWB radio produces adjacent channel interference with the WiFi radio. In an example, causing the WiFi signal with the one or more reduced transmit power, reduced modulation coding scheme, or reduced operating bandwidth to be transmitted includes transmitting to a remote WiFi radio a management frame ncluding a dynamic capability field which indicates to the remote WiFi radio to one or more of directly reduce the operating bandwidth to 20 MHz, reduce the transmit power, or directly reduce the modulation coding scheme to MCS-0 when the WiFi radio is an client station. In an example, causing the WiFi signal with the one or more reduced transmit power, reduced modulation coding scheme, or reduced operating bandwidth to be transmitted includes one or more of directly reduce the operating bandwidth to 20 MHz, reduce the transmit power, or directly reduce the modulation coding scheme to MCS-0 when the WiFi radio when the WiFi radio is an access point.

In another embodiment, a communication system is disclosed. The communication system includes: a WiFi radio; an ultrawide band (UWB) radio; wherein the WiFi radio is arranged to detect a UWB transmission; based on the UWB transmission generating adjacent channel interference with the WiFi radio, only reduce a transmit power of the WiFi radio and transmitting a WiFi signal with the reduced transmit power; and based on the UWB transmission generating overlapping frequency interference with the WiFi radio, cause a WiFi signal with one or more of reduced transmit power, reduced modulation coding scheme, or reduced operating bandwidth to be transmitted. In an example, the operating bandwidth of the WiFi radio is directly reduced to 20 MHz. In an example, the modulation coding scheme is directly reduced to modulation coding scheme (MCS) 0 defined by IEEE 802.11. In an example, the UWB radio and WiFi radio are co-located and wherein the WiFi radio arranged to detect the UWB transmission includes the WiFi radio arranged to receive an indication from an arbitrator of a frequency spectrum and timing of the UWB transmission from the UWB radio to determine whether adjacent channel interference or overlapping frequency interference is realized by the UWB radio. In an example, the UWB radio is remote to the WiFi radio and wherein the WiFi radio arranged to detect the UWB transmission includes the WiFi radio arranged to determine that a power of a signal output by a low noise amplifier (LNA) of the WiFi radio is above a threshold level at periodic intervals. In an example, the WiFi radio arranged to detect the UWB transmission includes the WiFi radio arranged to determine whether a weighed sum of the power of the signal output by the LNA and a power of in-band signals of the WiFi radio in one or more intervals is above the threshold level; based on the weighed sum being above the threshold, determine that UWB transmission from the UWB radio produces overlapping frequency interference with the WiFi transmission, and based on the weighted sum being below the threshold, determine that the UWB transmission from the UWB radio produces adjacent channel interference with the WiFi radio. In an example, the WiFi radio arranged to cause the WiFi signal with the one or more reduced transmit power, reduced modulation coding scheme, or reduced operating bandwidth to be transmitted includes the WiFi radio arranged to transmit to a remote WiFi radio a management frame including a dynamic capability field which indicates to the remote WiFi radio to one or more of directly reduce the operating bandwidth to 20 MHz, reduce the transmit power, or directly reduce the modulation coding scheme to MCS-0 when the WiFi radio is an client station. In an example, the WiFi radio arranged to cause the WiFi signal with the one or more reduced transmit power, reduced modulation coding scheme, or reduced operating bandwidth to be transmitted includes the WiFi radio arranged to one or more of directly reduce the operating bandwidth to 20 MHz, reduce the transmit power, or directly reduce the modulation coding scheme to MCS-0 when the WiFi radio when the WiFi radio is an access point.

In yet another embodiment, a WiFi radio is disclosed. The WiFi radio is arranged to detect a UWB transmission from a UWB radio; based on the UWB transmission generating adjacent channel interference with the WiFi radio, only reduce a transmit power of the WiFi radio and transmitting a WiFi signal with the reduced transmit power; and based on the UWB transmission generating overlapping frequency interference with the WiFi radio, cause a WiFi signal with one or more of reduced transmit power, reduced modulation coding scheme, or reduced operating bandwidth to be transmitted. In an example, the operating bandwidth of the WiFi radio is directly reduced to 20 MHz. In an example, the modulation coding scheme is directly reduced to modulation coding scheme (MCS) 0 defined by IEEE 802.11. In an example, the UWB radio and WiFi radio are co-located and wherein the WiFi radio arranged to detect the UWB transmission includes the WiFi radio arranged to receive an indication from an arbitrator of a frequency spectrum and timing of the UWB transmission from the UWB radio to determine whether adjacent channel interference or overlapping frequency interference is realized by the UWB radio.

A few implementations have been described in detail above, and various modifications are possible. The disclosed subject matter, including the functional operations described in this specification, can be implemented in electronic circuit, computer hardware, firmware, software, or in combinations of them, such as the structural means disclosed in this specification and structural equivalents thereof: including potentially a program operable to cause one or more data processing apparatus such as a processor to perform the operations described (such as a program encoded in a non-transitory computer-readable medium, which can be a memory device, a storage device, a machine-readable storage substrate, or other physical, machine readable medium, or a combination of one or more of them).

While this specification contains many specifics, these should not be construed as limitations on the scope of what may be claimed, but rather as descriptions of features that may be specific to particular implementations. Certain features that are described in this specification in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations.

Use of the phrase "at least one of" or "one of" preceding a list with the conjunction "and" should not be treated as an exclusive list and should not be construed as a list of categories with one item from each category, unless specifically stated otherwise. A clause that recites "at least one of A, B, and C" can be infringed with only one of the listed items, multiple of the listed items, and one or more of the items in the list and another item not listed.

Other implementations fall within the scope of the following claims.

## Claims

1.　A method for a WiFi radio and a ultrawide band (UWB) radio to co-exist, the method comprising:

　　detecting a UWB transmission;
　　based on the UWB transmission generating adjacent channel interference with the WiFi radio, only reducing a transmit power of the WiFi radio and transmitting a WiFi signal with the reduced transmit power; and
　　based on the UWB transmission generating overlapping frequency interference with the WiFi radio, causing a WiFi signal with one or more of a reduced transmit power, reduced modulation coding scheme, or reduced operating bandwidth to be transmitted.

2.　The method of claim 1, wherein the operating bandwidth of the WiFi radio is directly reduced to 20 MHz.

3.　The method of claim 1 or claim 2, wherein the modulation coding scheme is directly reduced to modulation coding scheme (MCS) 0 defined by IEEE 802.11.

4.　The method according to any preceding claim, wherein the UWB radio and WiFi radio are co-located and wherein detecting the UWB transmission comprises receiving an indication from an arbitrator of a frequency spectrum and timing of the UWB transmission from the UWB radio indicative of whether adjacent channel interference or overlapping frequency interference is realized by the UWB radio.

5.　The method according to any preceding claim, wherein the UWB radio is remote to the WiFi radio and wherein detecting the UWB transmission comprises determining that a power of a signal output by a low noise amplifier (LNA) of the WiFi radio is above a threshold level at periodic intervals.

6. The method of claim 5, wherein detecting the UWB transmission further comprises determining whether a weighed sum of the power of the signal output by the LNA and a power of in-band signals of the WiFi radio is above the threshold level in one or more intervals; based on the weighed sum being above the threshold, determining that UWB transmission from the UWB radio produces overlapping frequency interference with the WiFi transmission, and based on the weighted sum being below the threshold, determining that the UWB transmission from the UWB radio produces adjacent channel interference with the WiFi radio.

7. The method according to any preceding claim, wherein causing the WiFi signal with the one or more reduced transmit power, reduced modulation coding scheme, or reduced operating bandwidth to be transmitted comprises transmitting to a remote WiFi radio a management frame comprising a dynamic capability field which indicates to the remote WiFi radio to one or more of directly reduce the operating bandwidth to 20 MHz, reduce the transmit power, or directly reduce the modulation coding scheme to MCS-0 when the WiFi radio is an client station.

8. The method according to any preceding claim, wherein causing the WiFi signal with the one or more reduced transmit power, reduced modulation coding scheme, or reduced operating bandwidth to be transmitted comprises one or more of directly reducing the operating bandwidth to 20 MHz, reducing the transmit power, or directly reducing the modulation coding scheme to MCS-0 when the WiFi radio is an access point.

9. A communication system comprising:

   a WiFi radio;
   an ultrawide band (UWB) radio;
   wherein the WiFi radio is arranged to detect a UWB transmission; based on the UWB transmission generating adjacent channel interference with the WiFi radio, only reduce a transmit power of the WiFi radio and transmitting a WiFi signal with the reduced transmit power; and based on the UWB transmission generating overlapping frequency interference with the WiFi radio, cause a WiFi signal with one or more of reduced transmit power, reduced modulation coding scheme, or reduced operating bandwidth to be transmitted.

10. The communication system of claim 9, wherein the operating bandwidth of the WiFi radio is directly reduced to 20 MHz.

11. The communication system of claim 9 or claim 10, wherein the modulation coding scheme is directly reduced to modulation coding scheme (MCS) 0 defined by IEEE 802.11.

12. The communication system according to any of claims 9 to 11, wherein the UWB radio and WiFi radio are co-located and wherein the WiFi radio arranged to detect the UWB transmission comprises the WiFi radio arranged to receive an indication from an arbitrator of a frequency spectrum and timing of the UWB transmission from the UWB radio to determine whether adjacent channel interference or overlapping frequency interference is realized by the UWB radio.

13. The communication system according to any of claims 9 to 12, wherein the UWB radio is remote to the WiFi radio and wherein the WiFi radio arranged to detect the UWB transmission comprises the WiFi radio arranged to determine that a power of a signal output by a low noise amplifier (LNA) of the WiFi radio is above a threshold level at periodic intervals.

14. The communication system of claim 13, wherein the WiFi radio arranged to detect the UWB transmission comprises the WiFi radio arranged to determine whether a weighed sum of the power of the signal output by the LNA and a peak amplitude of in-band signals of the WiFi radio in one or more intervals is above the threshold level; based on the weighed sum being above the threshold, determine that UWB transmission from the UWB radio produces overlapping frequency interference with the WiFi transmission, and based on the weighted sum being below the threshold, determine that the UWB transmission from the UWB radio produces adjacent channel interference with the WiFi radio.

15. The communication system according to any of claims 9 to 14, wherein the WiFi radio arranged to cause the WiFi signal with the one or more reduced transmit power, reduced modulation coding scheme, or reduced operating bandwidth to be transmitted comprises the WiFi radio arranged to transmit to a remote WiFi radio a management frame comprising a dynamic capability field which indicates to the remote WiFi radio to one or more of directly reduce the operating bandwidth to 20 MHz, reduce the transmit power, or directly reduce the modulation coding scheme to MCS-0 when the WiFi radio is an client station.

FIG. 1

FIG. 2

300

UWB SIGNAL
DETECTION

FALSE    302    TRUE

304

FALSE    306

TRUE

307

TRUE    308    FALSE

310    312

Overlapping    Adjacent

# FIG. 3

FIG. 4

**EUROPEAN SEARCH REPORT**

Application Number

EP 25 19 6315

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2024 0006374 A (SAMSUNG ELECTRONICS CO LTD [KR]) 15 January 2024 (2024-01-15) | 1,2,5,7, 9,10,13, 15 | INV.<br>H04L1/00<br>H04B1/7163 |
| A | * paragraphs [0201], [0202] * | 3,4,6,8, 11,12,14 | H04W4/80<br>H04W52/00<br>H04W72/12 |
| A | ----- <br>WO 2024/012739 A1 (BAYERISCHE MOTOREN WERKE AG [DE]) 18 January 2024 (2024-01-18) * pages 3, 8, 10 * | 1-15 | H04W84/12 |
| A | ----- <br>WO 2022/197011 A1 (SAMSUNG ELECTRONICS CO LTD [KR]) 22 September 2022 (2022-09-22) * [0124], [0125] of the attached translation * ----- | 1-15 | |

TECHNICAL FIELDS
SEARCHED (IPC)

H04L
H04W
H04B

The present search report has been drawn up for all claims

| Place of search | Date of completion of the search | Examiner |
|---|---|---|
| Munich | 27 January 2026 | Flores Sanchez, L |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 6315

This annex lists the patent family members relating to the patent documents cited in the above-mentioned European search report.
The members are as contained in the European Patent Office EDP file on
The European Patent Office is in no way liable for these particulars which are merely given for the purpose of information.

27-01-2026

| Patent document cited in search report | Publication date | Patent family member(s) | Publication date |
|---|---|---|---|
| KR 20240006374 A | 15-01-2024 | NONE | |
| WO 2024012739 A1 | 18-01-2024 | CN 119213854 A | 27-12-2024 |
| | | EP 4307813 A1 | 17-01-2024 |
| | | US 2025310848 A1 | 02-10-2025 |
| | | WO 2024012739 A1 | 18-01-2024 |
| WO 2022197011 A1 | 22-09-2022 | KR 20220128803 A | 22-09-2022 |
| | | WO 2022197011 A1 | 22-09-2022 |

EPO FORM P0459

For more details about this annex : see Official Journal of the European Patent Office, No. 12/82